# EUROPÄISCHE PATENTSCHRIFT

(11) **EP 1 742 983 B1**
(45) Veröffentlichungstag und Bekanntmachung des Hinweises auf die Patenterteilung: **27.02.2008**
(21) Anmeldenummer: 05742777.5
(22) Anmeldetag: 12.04.2005
(51) Int. Cl.: C08G 64/40, C08F 6/00

(54) **VERFAHREN ZUR HERSTELLUNG VON POLYCARBONAT**
PROCESS FOR PRODUCING POLYCARBONATE
PROCEDE DE PREPARATION DE POLYCARBONATE

(30) Priorität: 21.04.2004 DE 102004019295
(43) Veröffentlichungstag der Anmeldung: 17.01.2007
(73) Patentinhaber: Bayer MaterialScience AG, 51368 Leverkusen (DE)
(72) Erfinder: KIRCHHOFF, Jörg, 51061 Köln (DE); KÖNIG, Thomas, 51375 Leverkusen (DE); KOHLGRÜBER, Klemens, 51515 Kürten (DE); KÜHLING, Steffen, 40670 Meerbusch (DE); MÖTHRATH, Melanie, 40223 Düsseldorf (DE); VAN MEIRVENNE, Dirk, 47800 Krefeld (DE)
(86) Internationale Anmeldenummer: PCT/EP2005/003828
(87) Internationale Veröffentlichungsnummer: WO 2005/103115

(56) Entgegenhaltungen:
- EP-A- 1 069 146
- EP-A- 1 095 957

## Beschreibung

Die Erfindung betrifft ein Verfahren zur Herstellung von Polycarbonat nach dem Umesterungsverfahren durch Umsetzung einer aromatischen Dihydroxyarylverbindung und eines Diarylcarbonats in der Schmelze und anschließender Entgasung der Schmelze unter Zusatz eines Schäumungsmittels.

Die Herstellung von aromatischen Oligo-/Polycarbonaten nach dem Schmelzeumesterungsverfahren ist hinlänglich bekannt und beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 vorbeschrieben.

Das Umesterungsverfahren führt wegen der chemischen Gleichgewichtsreaktion immer zu Produkten mit einem Gehalt an Restmonomeren, d.h. an Monohydroxyarylverbindungen, Dihydroxyarylverbindungen und Diarylcarbonaten. So werden bei Polycarbonaten mit einem geringen Gehalt an Hydroxylendgruppen ein höherer Gehalt an Diarylcarbonaten und ein geringer Gehalt an Monohydroxyaryl- und Dihydroxyarylverbindungen gemessen als bei Polycarbonaten mit einem höheren Gehalt an Hydroxylendgruppen. Bei diesen ist der Gehalt an Diarylcarbonaten geringer, aber der Gehalt an Monohydroxyaryl- und Dihydroxyarylverbindungen höher. Weiter beobachtet man, dass sich mit steigendem Molekulargewicht der Restmonomergehalt verringert. Die Restmonomere werden insbesondere durch Entgasung aus der Schmelze entfernt.

Ein niedriger Gehalt an Restmonomeren ist wünschenswert, da Restmonomere zu Formenbelägen auf den Verarbeitungsmaschinen bei der Verarbeitung der Polycarbonate führen. Überdies ist die Thermostabilität von Restmonomeren gering, so dass Polycarbonate mit hohem Restmonomergehalt schlechtere Eigenschaften hinsichtlich der Thermostabilität zeigen. Weiterhin wirken sich Restmonomere negativ auf das mechanische Bruchverhalten des Polycarbonats aus. Für ausgewählte Anwendungen, wie zum Beispiel im Lebensmittel- oder Medizinbereich, gelten Restmonomere als störend und nicht erwünscht.

Bei Polycarbonat, welches nach dem Schmelzeumesterungsverfahren hergestellt wird, ist der größte Anteil an Restmonomeren häufig die Diarylcarbonatkomponente, insbesondere Diphenylcarbonat. Es ist daher wünschenswert, bei der Entfernung von Flüchtigen vor allem diese Komponente zu entfernen. Ein besonders hoher Anteil der Diarylcarbonatkomponente ergibt sich bei niederen Molekulargewichten bei relativen Viskositäten von 1,18 bis 1,22, wie sie bevorzugt für optische Datenträger eingesetzt werden.

Ein weiteres Problem ist die Rückbildung der niedermolekularen Bestandteile wie z.B. Hydroxyarylverbindungen, Dihydroxyarylverbindungen und Kohlensäurediester aus dem Polycarbonat durch chemische Reaktion während der Entgasung, wodurch die Entgasung erheblich erschwert ist.

Es sind verschiedene Verfahren zur Herstellung von Polycarbonat nach dem Schmelzeumesterungsverfahren mit anschließender Entfernung von Restmonomeren über einen zusätzlichen Entgasungsschritt bekannt. Bevorzugt wird hierbei vor der Entgasung die Restkatalysatoraktivität im Polycarbonat reduziert. Die Reduktion der Aktivität des Katalysators erfolgt vorzugsweise durch Zugabe von sauren Komponenten als Inhibitoren wie beispielsweise Phosphorsäure, Schwefelsäure, schweflige Säure, Toluolsulfonsäure.

Die Zugabe und das Einmischen von solchen, die Katalysatoraktivität herabsetzenden, Komponenten erfordern einen erhöhten technischen Aufwand. Ferner wirken die genannten Komponenten häufig stark korrosiv gegenüber den Werkstoffen, aus denen die Apparate zur Durchführung der Polymerisation und Entgasung üblicherweise hergestellt sind. Die zugesetzten Komponenten, wie z.B. Phosphorsäure, können außerdem in dem anschließenden Entgasungsschritt mit den anderen flüchtigen Bestandteilen vom Polycarbonat abgetrennt werden, sich in der Anlage anreichern und durch Korrosion zu Schäden an der Anlage führen. Wenn die abgetrennten flüchtigen Bestandteile einschließlich der katalysatorhemmenden Komponente wieder in den Kreislauf der Anlage zurückgeführt werden, sind darüber hinaus nachteilige Effekte auf die Durchführung der Reaktion zu erwarten, da auf diese Weise die katalysatorhemmende Komponente den Reaktionsfortschritt der Polymerisation hemmen kann.

Ein weiteres Problem bei der Herstellung von Polycarbonat nach dem Schmelzeumesterungsverfahren ergibt sich aus einer zu langen Verweilzeit in der Entgasungsstufe unter erniedrigtem Partialdruck. Dadurch kann bei ausreichender Reaktivität der Schmelze eine starke Erhöhung des Molekulargewichts im Entgasungsschritt auftreten, die für die Entgasung unerwünscht ist.

In US 5 852 156 ist ein Verfahren zur Herstellung von Polycarbonat nach dem Schmelzeumesterungsverfahren beschrieben, bei dem die Schmelze unter einem Stickstoffstrom, jedoch nicht unter Aufschäumen, durch eine Zone mit niedrigem Druck geleitet wird. Die Verweilzeit in dieser Zone wird erhöht, indem die Schmelze nicht frei fällt, sondern entlang von vertikal angeordneten Drähten herabfließt. Bei diesem Verfahren wird eine starke Zunahme des Molekulargewichts während des Entgasungsschritts beobachtet.

In EP 1 095 957 A und EP 1 095 960 A wird ein ähnliches Verfahren wie in US 5 852 156 beschrieben. Ein Inertgas wird in einer Oligomerschmelze gelöst. Anschließend wird die Schmelze in eine Zone unter niedrigem Druck unter Aufschäumen entspannt. Das Aufschäumen bewirkt die Entfernung von Reaktionsprodukten, so dass die Polymerisation fortschreiten kann. Die Verweilzeit wird durch vertikal angeordnete Drähte verlängert, wodurch sich das Molekulargewicht in der Entgasungsstufe deutlich erhöht. Das Aufwärmen der Schmelze vor dem Entspannen ist nicht vorgesehen.

In EP 914 355 A ist das Einmischen eines begrenzt löslichen Trennmittels und die anschließende Entspannung ggf. unter Aufschäumen der Polymerlösung in einen Abscheider unter niedrigem Druck beschrieben.

US 6613128 beschreibt die Entgasung von in Schmelze hergestelltem Polycarbonat in einem Zweiwellenextruder. Ein solcher Extruder ist eine aufwändige und teure Maschine mit schweren, bewegten Teilen. Der Extruder hat wenig Stoffaustausclifläche und benötigt daher zur Entfernung von flüchtigen Komponenten, vor allem von Diarylcarbonaten, sehr hohe Temperaturen, die sich negativ auf die Produktqualität auswirken.

Ähnliche Nachteile hat die Entfernung von flüchtigen Bestandteilen aus Polymeren in einem Dünnschichtverdampfer, wie er beispielsweise in DE 1 925 063 A1 oder EP 0 267 025 A1 beschrieben ist. Die Entgasung von Polymeren in Entgasungszentrifugen, beispielsweise in US 4 940 472 beschrieben, ist ebenfalls aufwändig und aufgrund der Viskositäten von Polymerschmelzen und der auftretenden Zentrifugalkräfte nicht gut scale-up-fähig.

Aufgabe der vorliegenden Erfindung ist es, ein Verfahren zur Herstellung von Polycarbonat nach dem Schmelzeumesterungsverfahren bereitzustellen, bei dem das Polycarbonat einen geringen Restgehalt an Monomeren und anderen flüchtigen Bestandteilen, wie Monohydroxyarylverbindungen, Dihydroxyarylverbindungen und Dihydroxyarylcarbonaten, aufweist. Unter einem geringen Restgehalt an Monomeren und anderen flüchtigen Bestandteilen wird im Sinne der vorliegenden Erfindung ein Gehalt von weniger als 200 ppm, bevorzugt weniger als 100 ppm verstanden. Das Verfahren soll möglichst ohne Zugabe oder mit nur sehr geringen Mengen an Inhibitoren, d.h. chemischen Komponenten zur Deaktivierung des Katalysators, arbeiten. Unter geringen Mengen an Inhibitoren sind Mengen von weniger als 50 ppm, bevorzugt weniger als 20 ppm und besonders bevorzugt weniger als 5 ppm gemeint. Weiterhin soll bei dem Verfahren nur eine geringe Rückbildung niedermolekularer Bestandteile, wie Monohydroxyarylverbindungen, Dihydroxyarylverbindungen und Dihydroxyarylcarbonaten, von maximal 100 ppm stattfinden und das Molekulargewicht des Polycarbonats während der Entgasung nur wenig, d.h. um maximal 2000 g/mol, zunehmen. Gegenstand der Erfindung ist ein Verfahren zur Herstellung von Polycarbonat nach dem Umesterungsverfahren wenigstens mit den folgenden Schritten:
(a) Umsetzen wenigstens einer aromatischen Dihydroxyarylverbindung und eines Diarylcarbonats in der Schmelze wenigstens in Gegenwart eines Katalysators
(b) Vermischen der in Schritt (a) erhaltenen Schmelze mit einem Schäumungsmittel
(c) Entgasen der Schmelze aus (b) durch Einleiten der Schmelze über Eintrittsöffnungen in einen Abscheidebehälter.

Das Verfahren ist dadurch gekennzeichnet, dass das Entgasen gemäß Schritt (c) unter Aufschäumen erfolgt, wobei die Schmelze über die Eintrittsöffnungen in Teilströme von 0,1 bis 20 kg/h aufgeteilt wird, die Temperatur beim Eintritt in die Eintrittsöffnungen 250 bis 340 °C und der Druck in dem Abscheidebehälter 0,1 bis 20 mbar beträgt und dass der Katalysator in Schritt (a) zu mindestens 80 Gew.% deaktiviert wird oder der Schmelze ein Inhibitor zugesetzt wird.

Das erfindungsgemäße Verfahren zur Herstellung von Polycarbonat nach dem Schmelzeumesterungsverfahren gemäß Schritt (a), (b) und (c) kann diskontinuierlich oder kontinuierlich gestaltet sein. Jeder der Schritte (a), (b) und (c) kann sowohl einstufig als auch mehrstufig durchgeführt werden.

Was die Verfahrenstechnik des erfindungsgemäßen Verfahrens anbelangt, kann Schritt (a) grundsätzlich unter aus dem Stand der Technik bekannten Bedingungen und mit den aus dem Stand der Technik bekannten Apparaten durchgeführt werden. Beispielhaft sei hier die Durchführung gemäß DE 10 114 808 A oder DE 10 119 851 A genannt. Aufgrund der vorteilhaften Produktqualität, wie Gleichmäßigkeit der Viskosität, Farbe und Endgruppengehalte, ist die kontinuierliche Verfahrensweise bevorzugt.

Sobald wenigstens eine Dihydroxyarylverbindung und ein Diarylcarbonat sowie ggf. weitere Verbindungen als Schmelze vorliegen, wird in Gegenwart geeigneter Katalysatoren die Umsetzung gestartet. Der Umsatz der Umesterungsreaktion bzw. das Molekulargewicht des Polycarbonats wird solange erhöht, bis das gewünschte Endprodukt der Polymerisation erreicht ist. Dies kann beispielsweise dadurch geschehen, dass durch steigende Temperaturen und fallende Drücke die sich bei der Polymerisation abspaltende Monohydroxyarylverbindung abgeführt wird. Durch die Wahl des Verhältnisses von Dihydroxyarylverbindung zu Diarylcarbonat, durch die Verlustrate des Diarylcarbonats über die Brüden, welche von der Verfahrensweise und der Anlage zur Durchführung der Polymerisation abhängig ist, sowie durch ggf. zugesetzte Verbindungen, wie z.B. höhersiedende Monohydroxyarylverbindungen, werden die Endgruppen in Art und Konzentration geprägt.

Vorzugsweise ist das kontinuierliche Verfahren zur Herstellung von Polycarbonaten mehrstufig ausgeführt, indem zunächst eine Vorkondensation der Dihydroxyarylverbindung mit dem Diarylcarbonat sowie ggf. weiteren Reaktanten unter Einsatz von Katalysatoren ohne Abtrennen der gebildeten Monohydroxyarylverbindung erfolgt. Anschließend wird das Molekulargewicht in mehreren Reaktionsverdampferstufen bei schrittweise steigenden Temperaturen und schrittweise fallenden Drücken bis zum gewünschten Wert aufgebaut.

Die für die einzelnen Reaktionsverdampferstufen geeigneten Vorrichtungen, Apparate und Reaktoren sind aus dem Stand der Technik hinlänglich bekannt. Entsprechend dem Verfahrensverlauf handelt es sich um Wärmetauscher, Entspannungsapparate, Abscheider, Kolonnen, Verdampfer, Rührbehälter und Reaktoren oder sonstige Apparate, welche die nötige Verweilzeit bei ausgewählten Temperaturen und Drücken bereitstellen. Die gewählten Vorrichtungen müssen den nötigen Wärmeeintrag ermöglichen und so konstruiert sein, dass sie den kontinuierlich wachsenden Schmelzviskositäten gerecht werden.

In einer bevorzugten kontinuierlichen Verfahrensweise können die Reaktionspartner entweder gemeinsam aufgeschmolzen oder aber die feste Dihydroxyarylverbindung in der Schmelze des Diarylcarbonats oder das feste Diarylcarbonat in der Schmelze der Dihydroxyarylverbindung gelöst werden. Ferner können die Dihydroxyarylverbindung und das Diarylcarbonat jeweils als Schmelze, bevorzugt direkt aus der Herstellung, zusammengeführt werden. Die Verweilzeiten der Rohstoffschmelzen vor ihrer Vereinigung, insbesondere die. Verweilzeit der Schmelze der Dihydroxyarylverbindung werden so kurz wie möglich eingestellt. Das Schmelzegemisch kann dagegen wegen des im Vergleich zu den einzelnen Rohstoffen erniedrigten Schmelzpunktes des Rohstoffgemisches bei entsprechend niedrigeren Temperaturen ohne Qualitätseinbußen länger verweilen.

Der Katalysator, vorzugsweise in Phenol gelöst, wird der Schmelze zugemischt. Dann wird die Schmelze auf die Reaktionstemperatur erhitzt. Im Falle des technisch bedeutsamen Prozesses zur Herstellung von Polycarbonat aus 2,2-Bis-(4-hydroxyphenyl)-propan und Diphenylcarbonat beträgt die Temperatur zu Beginn 180 bis 220 °C, vorzugsweise 185 bis 210 °C, ganz besonders bevorzugt 185 bis 195 °C. Innerhalb einer Verweilzeit von 15 bis 90 min, vorzugsweise von 30 bis 60 min, wird das Reaktionsgleichgewicht eingestellt, ohne dass die gebildete Hydroxyarylverbindung entnommen wird. Die Reaktion kann bei Atmosphärendruck, aus technischen Gründen aber auch bei Überdruck gefahren werden. Der bevorzugte Druck in technischen Anlagen beträgt 2 bis 15 bar absolut.

Das Schmelzegemisch wird dann in eine erste Vakuumkammer, deren Druck auf 100 bis 400 mbar, vorzugsweise auf 150 bis 300 mbar eingestellt wird, entspannt und direkt danach in einer geeigneten Vorrichtung, z.B. einem Rohrbündelapparat mit senkrecht angeordneten Rohren, der von dem Produkt von oben nach unten durchströmt wird, bei gleichem Druck wieder auf die Eintrittstemperatur erhitzt. Bei dem Entspannungsvorgang wird die entstandene Hydroxyarylverbindung mit noch vorhandenen Monomeren verdampft. Nach einer Verweilzeit von 5 bis 30 min in einer Sumpfvorlage ggf. mit Umpumpung bei gleichem Druck und gleicher Temperatur wird das Reaktionsgemisch in eine zweite Vakuumkammer, deren Druck 50 bis 200 mbar, vorzugsweise 80 bis 150 mbar beträgt, entspannt und direkt danach in einer geeigneten Vorrichtung bei gleichem Druck auf eine Temperatur von 190 bis 250 °C, bevorzugt 210 bis 240 °C, besonders bevorzugt 210 bis 230 °C, erwärmt. Auch hierbei wird die entstandene Hydroxyarylverbindung mit noch vorhandenen Monomeren verdampft. Nach einer Verweilzeit von 5 bis 30 min in einer Sumpfvorlage, ggf. mit Umpumpung, bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280 °C, bevorzugt 240 bis 270 °C, besonders bevorzugt 240 bis 260 °C, erwärmt. Auch hierbei wird die entstandene Hydroxyarylverbindung mit noch vorhandenen Monomeren verdampft. Nach einer Verweilzeit von 5 bis 20 min in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300 °C, vorzugsweise 260 bis 290 °C, besonders bevorzugt 260 bis 280 °C, erwärmt. Auch hierbei wird die entstandene Hydroxyarylverbindung mit noch vorhandenen Monomeren verdampft.

Die Zahl dieser Reaktionsverdampferstufen, hier beispielhaft 4, kann 2 bis 6 betragen. Die Temperaturen und Drücke sind bei Änderung der Anzahl der Stufen in einer dem Fachmann geläufigen Weise entsprechend anzupassen, um vergleichbare Resultate zu erhalten. Die in diesen Stufen erreichte relative Viskosität des oligomeren Carbonats beträgt 1,04 bis 1,20, bevorzugt 1,05 bis 1,15, besonders bevorzugt 1,06 bis 1,10.

Die relative Viskosität wird als Verhältnis aus der Viskosität einer Polymerlösung und der Viskosität des reinen Lösungsmittels bestimmt. Sie wird generell in Dichlormethan bei einer Konzentration von 5 g Polymer auf ein Liter Lösungsmittel bei 25 °C ermittelt.

Das so erzeugte Oligocarbonat wird nach einer Verweilzeit von 5 bis 20 min in einer Sumpfvorlage ggf. mit Umpumpung bei gleichem Druck und gleicher Temperatur wie in der letzten Flash- bzw. Verdampferstufe in einen Scheiben- oder Korbreaktor gefördert und bei 250 bis 310 °C, bevorzugt 250 bis 290 °C, besonders bevorzugt 250 bis 280 °C, sowie bei Drücken von 1 bis 15 mbar, vorzugsweise 2 bis 10 mbar, und Verweilzeiten von 30 bis 90 min, vorzugsweise 30 bis 60 min, weiter aufkondensiert. Das Polycarbonat erreicht eine relative Viskosität von 1,12 bis 1,28, bevorzugt von 1,13 bis 1,26, besonders bevorzugt von 1,13 bis 1,24.

Die diesen Reaktor verlassende Schmelze wird in einem weiteren Scheiben- oder Korbreaktor auf die gewünschte Endviskosität bzw. das gewünschte Endmolekulargewicht gebracht. Die Temperatur beträgt 270 bis 330 °C, bevorzugt 280 bis 320 °C, besonders bevorzugt 280 bis 310 °C, der Druck beträgt 0,01 bis 3 mbar, vorzugsweise 0,2 bis 2 mbar, bei Verweilzeiten von 60 bis 180 min, vorzugsweise 75 bis 150 min. Die relativen Viskositäten werden auf das für die vorgesehene Anwendung nötige Niveau eingestellt und betragen 1,18 bis 1,40, bevorzugt 1,18 bis 1,36, besonders bevorzugt 1,18 bis 1,34.

Die Polymerisation des Polycarbonat - Oligomers kann anstelle der zweistufigen Fahrweise in zwei nacheinander geschalteten Korb- oder Scheibenreaktoren auch einstufig in einem Korb- oder Scheibenreaktor durchgeführt werden.

Die Brüden aus allen Verfahrensstufen werden unmittelbar abgeleitet, gesammelt und aufgearbeitet. Diese Aufarbeitung erfolgt in der Regel destillativ, um hohe Reinheiten der rückgewonnenen Stoffe zu erreichen. Dies kann beispielsweise gemäß DE 10 100 404 A erfolgen. Eine Rückgewinnung und Isolierung der abgespaltenen Monohydroxyarylverbindung in reinster Form ist aus ökonomischer und ökologischer Sicht selbstverständlich. Die Monohydroxyarylverbindung kann direkt zur Herstellung einer Dihydroxyarylverbindung oder eines Diarylcarbonats verwendet werden.

Die Scheiben- oder Korbreaktoren zeichnen sich dadurch aus, dass sie bei hohen Verweilzeiten eine sehr große, sich ständig erneuernde Oberfläche im Vakuum bereitstellen. Die Scheiben- oder Korbreaktoren sind entsprechend den Schmelzviskositäten der Produkte geometrisch ausgebildet. Geeignet sind beispielsweise Reaktoren wie sie in DE 44 47 422 C2, WO 02/44244, WO 02/85967 oder EP-A 1 253 163, oder Zweiwellenreaktoren, wie sie in der WO 99/28 370, beschrieben sind.

Die Oligocarbonate, auch sehr niedermolekulare, sowie die Polycarbonate werden in der Regel mittels Zahnradpumpen, Schnecken unterschiedlichster Bauart oder Verdrängerpumpen spezieller Bauart gefördert.

Besonders geeignete Werkstoffe zur Herstellung der Apparate, Reaktoren, Rohrleitungen, Pumpen und Armaturen sind nicht rostende Stähle vom Typ Cr Ni (Mo) 18/10 und Ni-Basislegierungen vom Typ C. Die nicht rostenden Stähle werden bis zu Prozesstemperaturen von etwa 290 °C und die Ni-Basislegierungen bei Prozesstemperaturen oberhalb von etwa 290 °C benutzt.

Ausgehend von der gemäß Schritt (a) erhaltenen Polycarbonatschmelze wird gemäß Schritt (b) durch Zugabe eines Schäumungsmittels und gemäß Schritt (c) in mindestens einem Schaument-, gasungsschritt durch Aufteilung der Polycarbonatschmelze in Teilströme sowie Druckerniedrigung ein Polycarbonat mit einem niedrigen Gehalt an niedermolekularen Bestandteilen gewonnen. Unter einem niedrigen Gehalt an niedermolekularen Bestandteilen wird im Sinne der vorliegenden Erfindung ein Gehalt von weniger als 200 ppm, bevorzugt weniger als 100 ppm verstanden.

Die gemäß Schritt (c) zu entfernenden niedermolekularen Bestandteile umfassen Monohydroxyarylverbindungen, Dihydroxyarylverbindungen und Dihydroxyarylcarbonate, beispielsweise Phenol, Bisphenol A und Diphenylcarbonat.

Das erfindungsgemäße Verfahren erlaubt eine Entgasung der Polycarbonatschmelze durch Partialdruckerniedrigung bei weitgehender Unterdrückung der schädlichen Rückbildung der Monomere sowie ohne wesentliche Erhöhung des Molekulargewichts. Maximal 100 ppm an niedermolekularen Bestandteile werden rückgebildet. Außerdem erhöht sich bei der Entgasung gemäß Schritt (c) das Molekulargewicht des Polycarbonats um maximal 2000 g/mol. Die effektive Entgasung unter Partialdruckerniedrigung mit einer kurzen Verweilzeit der Schmelze im Vakuum gelingt dadurch, dass der Schmelze ein Schäumungsmittel zugesetzt und der Schmelzestrom durch eine oder mehrere Eintrittsöffnungen in den Abscheidebehälter (nachfolgend auch als Entgasungsbehälter bezeichnet) geleitet wird. Durch die Zugabe des Schäumungsmittels wird zum einen die Oberfläche der Schmelze deutlich erhöht und zum anderen der Partialdruck der zu entfernenden flüchtigen Substanzen zusätzlich erniedrigt.

Das Schäumungsmittel ist in der Regel eine leicht flüchtige Substanz mit einem hohen Dampfdruck. Das Aufschäumen der Polycarbonatschmelze wird durch den hohen Dampfdruck des Schäumungsmittels initiiert. Der Schaum bewirkt eine starke Oberflächenvergrößerung, die vorteilhaft für die Entgasung ist. Zudem wird eine Erniedrigung des Partialdrucks der im Polymer befindlichen Reste an Lösungsmittel oder anderen flüchtigen Bestandteilen in der Gasphase des Abscheiders bewirkt, wodurch prinzipiell niedrigere Restgehalte an flüchtigen Bestandteilen zu erzielen sind.

Als Schäumungsmittel wird bevorzugt ein inertes Gas oder eine inerte Flüssigkeit oder eine Mischung aus inerten Gasen und/oder Flüssigkeiten als Schäumungsmittel eingesetzt. Beispiele für geeignete Schäumungsmittel sind Stickstoff, Kohlendioxid, Wasser, Methan und Helium. Besonders bevorzugt wird Wasser, Kohlendioxid oder Stickstoff und ganz besonders bevorzugt Stickstoff als Schäumungsmittel eingesetzt.

Im Rahmen der vorliegenden Erfindung wurde außerdem gefunden, dass der Entgasungserfolg wesentlich gesteigert wird, wenn die Schaumentgasung mehrfach hintereinander durchgeführt wird. Dafür wird vor jedem Schaumentgasungsschritt (c) ein Schäumungsmittel gemäß Schritt (b) zugegeben. Bei der Ausführung der Entgasung in mehreren Stufen ist darauf zu achten, dass die Verweilzeit insgesamt klein bleibt, um unerwünschte Nachpolymerisation, Rückbildung von niedermolekularen Substanzen, Verfärbung und Degradation zu verhindern. Durch eine geeignete Apparatekonfiguration ist eine kurze Verweilzeit zu erreichen. Wird die Schaumentgasung in mehreren Stufen durchgeführt; müssen die einzelnen Stufen nicht zwangsläufig exakt gleich ausgeführt werden. Je nach Anwendungsfall, d.h. je nach Durchsatz, Viskosität des Produktes und Temperatur, können die Stufen in ihrer Ausführung bzgl. Aufteilung der Teilströme, Menge des Schäumungsmittels, Temperatur und Durchmesser der Eintrittsöffnungen unterschiedlich ausgeführt sein.

Um das Dispergieren und Lösen des Schäumungsmittels in der. Polycarbonatschmelze zu verbessern, kann der Druck im statischen Mischer durch eine geeignete Vorrichtung, beispielsweise ein Druckhalteventil oder eine Drossel, erhöht werden. Dem Fachmann ist bekannt, dass sich mit einer Erhöhung des Drucks eine größere Menge eines flüchtigen Stoffes in einer Schmelze lösen lässt.

Das Schäumungsmittel wird in Schritt (b) in der Polycarbonatschmelze verteilt. Zum Verteilen und Lösen des Schäumungsmittels wird bevorzugt ein statischer Mischer eingesetzt. Übliche Ausführungsformen von statischen Mischern für das Mischen von hochviskosen Polycarbonatschmelzen sind aus dem Stand der Technik hinlänglich bekannt. Der statische Mischer hat bevorzugt die Struktur eines SMX-Mischers, der ausführlich beispielsweise in Arno Signer, Statisches Mischen in der Kunststoffverarbeitung und -herstellung, Plastverarbeiter 11(43), 1992 beschrieben ist. Bevorzugt können auch Statikmischer gemäß EP 0947239 oder US 6 394 644 B verwendet werden. Besonders bevorzugt ist ein SMX-Mischer, dessen freier innerer Durchmesser aufgrund unterschiedlicher Mischelemente entlang des Mischers variiert, wobei ganz besonders bevorzugt sich der freie innere Durchmesser in Strömungsrichtung des durchströmten Mischers z.B. kaskadenförmig oder stufenförmig verringert.

Um das Dispergieren und Lösen des Schäumungsmittels in der Polycarbonatschmelze zu verbessern, kann der Druck im statischen Mischer durch eine geeignete Vorrichtung, beispielsweise ein Druckhalteventil oder eine Drossel, erhöht werden. Dem Fachmann ist bekannt, dass sich mit einer Erhöhung des Drucks eine größere Menge eines flüchtigen Stoffes in einer Schmelze lösen lässt.

Die Beschaffenheit der Polycarbonatschmelze beim Eintritt in die Eintrittsöffnungen gemäß Schritt (c) vor der Entspannung, namentlich das Vorhandensein von ein oder mehreren Phasen, ist für den Entgasungserfolg und die Prozessstabilität entscheidend. Ein besonders guter Entgasungserfolg wird erreicht, wenn vor der Entspannung alle flüchtigen Komponenten, inklusive Schäumungsmittel, vollständig gelöst sind. Vollständig gelöst im Sinne der vorliegenden Erfindung bedeutet, dass die Polycarbonatsclimelze mit dem darin enthaltenen Lösemittel und zugesetztem Schäumungsmittel ein einphasiges Gemisch bildet. In der Polycarbonatschmelze befinden sich dann am Eintritt in die Eintrittsöffnungen keine Blasen oder Tröpfchen.

Insbesondere soll das eingemischte Schäumungsmittel komplett gelöst werden. Die Menge des Schäumungsmittels, der Druck und die Temperatur werden dabei so gewählt, dass das Schäumungsmittel vollständig in der Polycarbonatschmelze gelöst wird. Druck und Temperatur, die für das komplette Lösen einer bestimmten Menge Schäumungsmittel notwendig sind, hängen von der Art des Schäumungsmittels ab. Dem Fachmann ist bekannt, dass sich bei gegebener Temperatur einer Polycarbonatschmelze bei Erhöhung des Druckes die maximal lösliche Menge eines Schäumungsmittels erhöht.

Das Schäumungsmittel soll so gewählt sein, dass schon geringe Mengen ausreichen, um nach einer Druckentlastung beim Eintritt in die Eintrittsöffnungen ein starkes Aufschäumen der Polycarbonatschmelze zu bewirken. Im Rahmen des erfindungsgemäßen Verfahrens bedeutet eine geringe Menge, dass der Schmelze 0,01 bis 1 Masse-% Schäumungsmittel, bezogen auf die Polymermasse, zugegeben werden, besonders bevorzugt 0,02 bis 0,5 Masse-%, ganz besonders bevorzugt 0,05 bis 0,3 Masse-%. Trotz dieser geringen Menge an Schäumungsmittel erfolgt die Entspannung unter Aufschäumen der Polycarbonatschmelze.

Der Dampfdruck des Schäumungsmittels für die am Eintritt in die Eintrittsöffnungen der Entgasungsstufe (c) herrschende Temperatur bei der eingestellten Konzentration an Schäumungsmittel in der Schmelze beträgt 1 bis 100 bar, bevorzugt 2 bis 60 bar und besonders bevorzugt 10 bis 40 bar.

Vor, während oder nach dem Einmischen des Schäumungsmittels kann die Polycarbonatschmelze erwärmt oder gekühlt werden, bevorzugt erwärmt. Eine erhöhte Temperatur bedeutet einen erhöhten Dampfdruck der flüchtigen Komponenten, so dass in der anschließenden Entgasung die Schaumbildung unterstützt wird und die Abtrennung der flüchtigen Bestandteile einfacher gelingt. Dem Fachmann sind geeignete Apparate zum Erwärmen oder Kühlen einer Polymerschmelze, z.B. Rohrbündelwärmeübertrager, Plattenwärmeübertrager oder Wärmeübertrager mit statischen Mischern, bekannt.

Vorzugsweise beträgt die Temperaturänderung in der Schmelze vom Punkt der Schäumungsmittelzugabe bis zum Eintritt in die Eintrittsöffnungen gemäß Schritt (c) nicht mehr als 100°C, bevorzugt nicht mehr als 90°C. Die Temperatur der Polycarbonatschmelze am Eintritt in die Eintrittsöffnungen beträgt vorzugsweise 250°C bis 340°C, besonders bevorzugt 260°C bis 320°C. Eine weitere Erwärmung der Polycarbonatschmelze ist auch nach dem Eintritt in die Eintrittsöffnungen bis zum Eintritt in den Entgasungsbehälter möglich, wenn beispielsweise beheizbare Rohre als Eintrittsöffnungen und Entspannungsorgane eingesetzt werden. Vorzugsweise beträgt die Temperaturdifferenz zwischen dem Eintritt in die Eintrittsöffnungen und dem Eintritt in den Abscheidebehälter nicht mehr als 100°C, besonders bevorzugt nicht mehr als 80°C.

Gemäß Schritt (c) wird die Polycarbonatschmelze über Eintrittsöffnungen in Teilströmen von 0,1 bis 20 kg/h in einen Abscheidebehälter eingeleitet, bevorzugt 0,125 bis 10 kg/h und besonders bevorzugt 0,15 bis 5 kg/h.

Die Polycarbonatschmelze wird in einen Abscheidebehälter mit niedrigem Druck von 0,1 bis 20 mbar, bevorzugt von 0,3 bis 10 mbar, besonders bevorzugt von 0,5 bis 5 mbar, entspannt. Die Temperatur der Polycarbonatschmelze beim Eintritt in den Entgasungsbehälter beträgt erfindungsgemäß 250 bis 340 °C, bevorzugt 260 bis 320°C und besonders bevorzugt 270 bis 300°C.

Die Polycarbonatschmelze wird von oben über die Eintrittsöffnungen in den Abscheidebehälter eingeleitet. Dementsprechend befinden sich die Eintrittsöffnungen im oberen Bereich des Abscheidebehälters. Die Eintrittsöffnungen sind insbesondere in einer Ebene angeordnet, können jedoch auch auf unterschiedlichen Ebenen im oberen Bereich des Abscheidebehälters angeordnet sein.

Die Eintrittsöffnungen übernehmen die Funktion von Entspannungsorganen. Wesentliches Auslegungskriterium für diese Entspannungsorgane ist der Druckverlust, der durch sie erzeugt wird. Der Druckverlust ergibt sich aus der Viskosität der Polymerschmelze, abhängig von Prödukttyp, Temperatur und der Konzentration an Flüchtigen und Schäumungsmittel, dem Durchsatz und der Geometrie der Entspannungsorgane. Dem Fachmann ist der Zusammenhang zwischen Durchmesser der Bohrung, Massenstrom, Viskosität der Polycarbonatschmelze und Druckverlust bekannt. Bei der Auslegung des Druckverlustes kann der Fachmann von dem Einfluss des Schleppmittels absehen, so dass eine Auslegung nach bekannten Regeln der Technik möglich ist. Der Druckverlust soll so eingestellt werden, dass der Absolutdruck vor dem Eintritt in die Eintrittsöffnungen hoch genug ist, um ein Aufschäumen vor dem Eintritt in die Eintrittsöffnungen zu verhindern. Das Aufschäumen findet erst nach dem Eintritt in die Eintrittsöffnungen statt.

Als Eintrittsöffnungen eignen sich beispielsweise Bohrungen oder Schlitze, im folgenden Düsen genannt, in einer Platte (auch als Düsenplatte bezeichnet). Düsen werden bevorzugt als Bohrungen in einer Düsenplatte ausgeführt. Die Platte kann prinzipiell von beliebiger Dicke sein.

In einer bevorzugten Ausführung des erfindungsgemäßen Verfahrens werden die Teilströme der Polycarbonatschmelze jeweils durch Düsen in einer horizontal angeordneten. Platte geführt. Die Bohrungen münden direkt in den Abscheidebehälter, in dem ein niedriger Druck herrscht. Bevorzugte Durchmesser der Düsen sind 0,8 bis 5 mm, besonders bevorzugt 1 bis 4 mm.

Auch Rohre können als Eintrittsöffnungen eingesetzt werden. Bevorzugt sind die Rohre vertikal angeordnet und von oben nach unten mit Polycarbonatschmelze durchströmt. Bevorzugte Rohrdurchmesser sind 4 bis 20 mm, besonders bevorzugt 5 bis 15 mm.

In einer weiteren bevorzugten Ausführung des erfindungsgemäßen Verfahrens werden die Rohre in der Funktion eines Wärmeübertragers bzw. Wärmetauschers eingesetzt. Hierfür werden sie insbesondere als paralleles Bündel ausgeführt und von einem Wärmeübertragungsmedium, bevorzugt ein flüssiges Wärmeübertragungsöl oder kondensierender Wasser- oder Wärmeübertragungsöldampf, umgeben. Die Länge der Rohre beträgt bevorzugt 300 bis 2500 mm, besonders bevorzugt 500 bis 2000 mm.

Die Rohre des Rohrbündelwärmeübertragers münden also direkt in den Abscheidebehälter. Die einzelnen Rohre werden so ausgeführt, dass die Polycarbonatschmelze am Eintritt in den Rohrbündelwärmeübertrager noch nicht schäumt. Die Rohre können durch Düsen verengt werden, um einen vorgegebenen Druckverlust einzuhalten. Der Druckverlust in einem einzelnen Rohr ist dabei abhängig von der Beschaffenheit des Polymers, der Temperatur am Ein- und am Austritt des Rohres, dem Durchsatz und dem Anteil an Flüchtigen jeweils am Ein- und am Austritt des Rohres. Erst an der Austrittsseite der Rohre zum Abscheider hin, d.h. an den Eintrittsöffnungen des Abscheidebehälters, entsteht der Polymerschaum. Die Durchmesser der Rohre betragen hierbei bevorzugt 4 bis 20 mm, besonders bevorzugt 5 bis 15 mm. Düsen, die zur Erhöhung des Druckverlustes eingesetzt werden, haben Durchmesser von 0,8 bis 5mm, bevorzugt von 1 bis 4mm. Der Massenstrom pro Rohr beträgt 0,1 bis 20 kg/h.

Die Ausführung des erfindungsgemäßen Verfahrens mit einem Rohrbündelwärmetauscher bietet eine bevorzugte Methode zur Heizung oder Kühlung der Polymerschmelze, wie weiter oben dargestellt ist.

Die Abstände der Eintrittsöffnungen voneinander, gemessen von Mittelpunkt zu Mittelpunkt, und damit die Abstände der Teilströme beim Eintritt in den Abscheidebehälter, betragen 5 bis 50 mm, bevorzugt 10 bis 40 mm und besonders bevorzugt 15 bis 25 mm.

Die Verweilzeit der Polycarbonatschmelze in dem Abscheidebehälter muss einerseits ausreichend groß sein, um eine ausreichende Entgasung zu ermöglichen. Sie darf andererseits jedoch nicht zu groß sein, um die Produktqualität des Polycarbonats nicht zu beeinträchtigen. Die Verweilzeit der Schmelze in dem Abscheidebehälter in Schritt (c) beträgt bevorzugt maximal 10 Minuten, besonders bevorzugt maximal 5 Minuten.

In einer weiteren Ausführungsform des erfindungsgemäßen Verfahrens kann die Verweilzeit durch Leitelemente beeinflusst werden. Die Leitelemente haben die Funktion, die Verweilzeit zu verlängern und gleichzeitig die Oberfläche der Polycarbonatschmelze zu vergrößern.

Die Leitelemente können z.B. aus Lochblechen, profilierten Blechen, Drähten, Drahtgeflechten, Gliederketten, schmalen Metallstreifen mit beliebigen Querschnitten u.ä. bestehen, wobei sie bevorzugt im Wesentlichen horizontal angeordnet sind. Beispiele für solche Leitelemente werden z.B. in DE-A 10144233 oder in EP-A 1095960 beschrieben. Besonders bevorzugt sind die Leitelemente als Drähte ausgeführt, welche in dem Abscheidebehälter im Wesentlichen horizontal angeordnet sind. Die Entgasung der Polycarbonatschmelze ist dadurch stark verbessert, ohne dass eine schädliche Rückspaltung des Polycarbonats auftritt.

Die Drähte können nahezu beliebig angeordnet sein, solange sich die Drähte nicht berühren und im Wesentlichen horizontal angeordnet sind. Im. Wesentlichen horizontal bedeutet im Sinne der vorliegenden Erfindung eine maximale Abweichung von der Horizontalen um 20°. Insbesondere sollen zwei oder mehrere Drähte einander nicht berühren, beispielsweise durch Überkreuzen. Es können z.B. mehrere Drähte in mehreren Ebenen vorgesehen sein, wobei sich weder die Drähte einer Ebene noch die Drähte verschiedener Ebenen einander berühren. Sind mehrere Drähte in einer Ebene vorgesehen, können diese im Wesentlichen parallel zueinander angeordnet sein. Die Drähte einer Ebene sollen insbesondere einen Winkel von maximal 20° aufweisen. Sind darüber hinaus mehrere Ebenen von Drähten vorgesehen, können die Drähte verschiedener Ebenen in einem beliebigen Winkel zueinander stehen. Bevorzugt bilden die Drähte verschiedener Ebenen einen Winkel von maximal 180°, besonders bevorzugt von 30 bis 150°, ganz besonders bevorzugt von 70 bis 110°. Werden die einzelnen Drähte einer Ebene nicht parallel gespannt, so wird der Verdrehwinkel der Drähte verschiedener Ebenen anhand der Winkelhalbierenden festgelegt.

Bevorzugt sind Drähte mit einem Durchmesser von 1 mm bis 5 mm, besonders bevorzugt 2 mm bis 4 mm.

Der Vorteil von im Wesentlichen horizontal angeordneten Drähten, die bevorzugt zwischen gegenüberliegenden Wänden des Abscheidebehälters gespannt sind, liegt darin, dass mit einer minimalen Kontaktfläche zwischen Metallwerkstoff des Drahtes und Polycarbonatschmelze eine effektive Oberflächenemeuerung und damit ein guter Stoffaustausch zwischen Gasraum und Polycarbonatschmelze stattfinden kann. Auf senkrecht angeordneten Drähten kann sich in ungünstigen Fällen ein großer Holdup aus hochviskoser Polymerschmelze bilden, d.h. die Polymerschmelze staut sich auf den Drähten an. Dies führt zu ungünstigen Verweilzeitverteilungen oder zur Polymerdegradation sowie zu Erhöhung des Molekulargewichtes und Rückbildung von flüchtigen Bestandteilen. All dies kann für die Qualität des Produktes schädlich sein. Auch hat sich in den Experimenten gezeigt, dass ein Netz, Geflecht, Gewirke o.dgl. aus Drähten, wie z.B. in EP-A 1 095 960 beschrieben, an den Knotenpunkten der Drähte zu einem großen Holdup von Polycarbonatschmelze und zu Polymerdegradation neigt. Horizontal gespannte Drähte bewirken zudem eine gute Zerteilung der Schaumstränge und damit eine effektiv vergrößerte Oberfläche für den Stoffaustausch gegenüber Blechen o.ä.

Eine höhere Viskosität der Polycarbonatschmelze führt bei ansonsten gleichen Leitelementen zu einem größeren Holdup, zu größeren Schichtdicken und längeren Verweilzeiten.

Die Polycarbonatschmelze fällt in dem Abscheidebehälter nach unten in einen Sumpf und wird dort von einem geeigneten Austragsorgan, beispielsweise einer Zahnradpumpe oder einem Austragsextruder, abgezogen. Bevorzugt erfolgt der Austrag mit einer Zahnradpumpe. Der Boden des Abscheidebehälters ist bevorzugt konisch mit der Spitze nach unten ausgeführt. Der Winkel des Konus gegen die Horizontale beträgt bevorzugt 20 bis 60°, besonders bevorzugt 30 bis 45°. Bei sehr großen Durchsätzen (beispielsweise größer als 12 Tonnen pro Stunde) kann auch eine Ausführung gewählt werden, bei der der Boden des Abscheidebehälters aus mehreren Konen besteht, welche jeweils an ihrem tiefsten Punkt ein Austragsorgan aufweisen.

Die in Schritt (c) abgetrennten niedermolekularen Verbindungen können von dem Schäumungsmittel befreit und der Aufarbeitung zugeführt werden. Hierbei können die abgetrennten Flüchtigen, die zu einem erheblichen Anteil aus dem in dem Verfahren eingesetzten Diarylcarbonat bestehen, in den Prozess zur Herstellung des Polycarbonates zurückgeführt werden.

Bei dem erfindungsgemäßen Verfahren beträgt ferner die Konzentration an phenolischen OH-Gruppen in dem in Schritt (a) erhaltenen Polycarbonat vorzugsweise 100 bis 450 ppm.

Der Katalysator in Schritt (a) wird zu mindestens 80 Gew-% deaktiviert, insbesondere thermisch deaktiviert. Dadurch ist die Aktivität des Katalysators so weit herabgesetzt, dass eine Fortsetzung der Reaktion in Schritt (b) weitgehend unterbunden ist.

Um eine Weiterreaktion in Schritt (c) zu vermeiden, wird der Schmelze ein Inhibitor zugesetzt. Dies geschieht insbesondere dann, wenn der Katalysator in Schritt (a) nicht zu mindestens 80 Gew-% deaktiviert ist. Unter Inhibitoren werden Verbindungen verstanden, welche die Kinetik von chemischen Reaktionen entscheidend hemmen. So können qualitätsmindernde Veränderungen des Polymers vermieden werden. Beispielsweise ist der Zusatz von Inhibitoren nach der Herstellung von Polymeren erforderlich, die nach abgeschlossener Polymerisationsreaktion noch Monomere und Reaktionsprodukte enthalten, um den Gehalt an niedermolekularen Verbindungen durch thermische Verfahren zu reduzieren.

Als Inhibitoren für Polycarbonat, hergestellt nach dem Schmelzeumesterungsverfahren, sind vorzugsweise Säurekomponenten, wie Lewis- oder Brönstedsäuren, oder Ester starker Säuren geeignet. Der pKa-Wert der Säure sollte nicht größer als 5, bevorzugt kleiner 3 sein. Beispiele für geeignete Säurekomponenten sind: ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Salzsäure (Chlorwasserstoff), Schwefelsäure, Ascorbinsäure, Oxalsäure, Benzoesäure, Salicylsäure, Ameisensäure, Essigsäure, Adipinsäure, Zitronensäure, Benzolsulfonsäure, Toluolsulfonsäure, Dodekylbenzolsulfonsäure und alle sonstigen Phenyl-substituierten Benzolsulfonsäuren, Salpetersäure, Terephthalsäure, Isophthalsäure, Stearinsäure und sonstige Fettsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Dimethylsulfat, Borsäureester, Arylboronsäureester und andere unter Wassereinfluss säuregenerierende Komponenten wie Tri-iso-octylphosphin, Ultranox 640 und BDP (Bisphenoldiphosphat-Oligomer).

Bevorzugt kommen dabei ortho-Phosphorsäure, phosphorige Säure, Pyrophosphorsäure, Hypophosphorsäure, Polyphosphorsäuren, Benzolphosphonsäure, Natriumdihydrogenphosphat, Borsäure, Arylboronsäuren, Benzoesäure, Salicylsäure, Benzolsulfonsäure, Toluolsulfonsäure, Dodekylbenzolsulfonsäure und alle sonstigen Phenyl-substituierten Benzolsulfonsäuren, Säurechloride wie Chlorameisensäurephenylester, Stearinsäurechlorid, Acetoxy-BP-A, Benzoylchlorid sowie Ester, Halbester und verbrückte Ester der oben genannten Säuren wie beispielsweise Toluolsulfonsäureester, Phosphorsäureester, Phosphorigsäureester, Phosphonsäureester, Borsäureester, Arylboronsäureester und andere unter Wassereinfluss säuregenerierende Komponenten wie Tri-iso-octylphosphin, Ultranox 640 und BDP in Frage.

Besonders bevorzugt kommen ortho-Phosphorsäure, Pyrophosphorsäure, Polyphosphorsäuren, Benzolphosphonsäure, Benzoesäure, Benzolsulfonsäure, Toluolsulfonsäure, Dodekylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester, Phosphorsäureester, Phosphorigsäureester, Phosphonsäureester und andere unter Wassereinfluss säuregenerierende Komponenten wie Tri-iso-octylphosphin, Ultranox 640 und BDP in Frage. Ganz besonders bevorzugt kommen ortho-Phosphorsäure, Pyrophosphorsäure, Benzolsulfonsäure, Toluolsulfonsäure, Dodekylbenzolsulfonsäure und alle sonstigen Phenyl-substituierten Benzolsulfonsäuren sowie Ester, Halbester und verbrückte Ester der oben genannten Säuren wie beispielsweise Toluolsulfonsäureester und Phosphorsäureester zum Einsatz.

Die Zudosierung des Inhibitors kann in fester, flüssiger oder gasförmiger Form erfolgen. In einer bevorzugten Verfahrensweise wird die saure Komponente als Inhibitor kontinuierlich in den beispielsweise von den Monomeren zu befreienden Produktstrom im Herstellprozess direkt nach Erreichen des angestrebten Endmolekulargewichts homogen zugemischt, um sofort danach mit der Verdampfung der Restmonomeren zu beginnen. In einer besonders bevorzugten Verfahrensweise wird eine Additivierung zur Verbesserung einzelner Produkteigenschaften hinter der Säuredosierung und der Ausdampfung vorgenommen und nicht mit dem Schritt der Ausdampfung zusammengefasst, weil oft Additive benutzt werden, die im Vakuum, das für die Ausdampfung unabdingbar ist, flüchtig sind und dann schlecht in den nötigen Konzentrationen im Polymer einzustellen sind. Bevorzugt werden die sauren Komponenten in flüssiger Form zugegeben. Da die zu dosierenden Mengen sehr gering sind, werden vorzugsweise Lösungen der sauren Komponenten verwendet. Geeignete Lösemittel sind solche, die den Prozess nicht stören, chemisch inert sind und schnell verdampfen. Beispiele für geeignete Lösemittel sind Wasser oder Methanol.

Die nachfolgende Tabelle zeigt beispielhaft die Konzentrationen an Flüchtigen in verschiedenen, nach dem Schmelzeumesterungsverfahren gemäß Schritt (a) hergestellten Polycarbonatproben. Hierbei ist Phenol die Monohydroxyarylverbindung, Diphenylcarbonat (DPC) das Diarylcarbonat und BPA (Bisphenol A) die Dihydroxyarylverbindung.

| relative Viskosität | ppm OH-Endgruppen | ppm Phenol | ppm DPC | ppm BPA |
|---|---|---|---|---|
| 1.2 | 330 | 65 | 570 | 5 |
| 1.2 | 500 | 95 | 520 | 12 |
| 1.295 | 300 | 35 | 190 | 4 |
| 1.295 | 400 | 45 | 170 | 8 |

Die nach dem erfindungsgemäßen Verfahren erhältlichen thermoplastischen Polycarbonate sind ebenfalls Gegenstand der vorliegenden Erfindung. Sie haben Restgehalte von weniger als 100 ppm an Kohlensäurediestern, weniger als 50 ppm an Hydroxyarylverbindungen und weniger als 10 ppm an Dihydroxyarylverbindungen, einen äußerst geringen Gehalt von Kationen und Anionen von jeweils maximal 60 ppb, bevorzugt maximal 40 ppb und besonders bevorzugt maximal 20 ppb (als Na-Kation berechnet), wobei als Kationen solche von Alkali- und Erdalkalimetallen vorliegen, welche als Verunreinigung aus den verwendeten Rohstoffen und den Phosphonium- und Ammoniumsalzen stammen. Weitere Ionen wie Fe-, Ni-, Cr-, Zn-, Sn, Mo-, Al-Ionen und ihre Homologen können in den Rohstoffen enthalten sein oder durch Abtrag oder Korrosion aus den Werkstoffen der benutzten Anlage stammen. Der Gehalt dieser Ionen ist in der Summe maximal 2 ppm, bevorzugt maximal 1 ppm und besonders bevorzugt maximal 0,5 ppm.

Um geringste Mengen an Verunreinigungen in dem Polycarbonat zu erzielen, werden reinste Rohstoffe eingesetzt. Derart reine Rohstoffe sind z. B. nur nach Reinigungsverfahren wie Umkristallisieren, Destillieren, Umfällen mit Wäschen u.ä. erhältlich.

Als Anionen liegen solche von anorganischen Säuren und von organischen Säuren in äquivalenten Mengen vor (z. B. Chlorid, Sulfat, Carbonat, Phosphat, Phosphit, Oxalat, u.a.)

Die Polycarbonate zeichnen sich auch dadurch aus, dass sie keine nachweisbaren Mengen eingebauter Spalt- oder Zersetzungsprodukte mit reaktiven Endgruppen, die während des Umesterungsprozesses gebildet werden, enthalten. Solche Spalt- oder Zersetzungsprodukte sind beispielsweise Isopropenylmonohydroxyaryle oder deren Dimere.

Die erhaltenen mittleren Gewichtsmolekulargewichte betragen 15.000 bis 40.000 g/mol, bevorzugt 18.000 bis 36.000 g/mol, besonders bevorzugt 18.000 bis 34.000 g/mol, wobei das mittlere Gewichtsmolekulargewicht über die relative Viskosität bestimmt wurde. Insbesondere sind nach dem erfindungsgemäßen Verfahren Polycarbonate mit einer relativen Viskosität von 1,18 bis 1,22 erhältlich.

Der Gehalt an OH-Endgruppen der erfindungsgemäß erhältlichen Polycarbonate liegt bei 100 bis 450 ppm, bevorzugt 150 bis 400 ppm, besonders bevorzugt 200 bis 350 ppm.

Die nach dem erfindungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

Die für die Umsetzung mit den Dihydroxyarylverbindungen geeigneten Diarylcarbonate sind solche der Formel 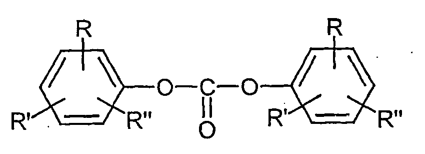 wobei R,R' und R" unabhängig voneinander H, gegebenenfalls verzweigtes C₁-C₃₄ Alkyl/Cycloalkyl, C₇-C-₃₄-Alkylaryl oder C₆-C₃₄-Aryl darstellen und beide Seiten verschieden sein können. R kann auch -COO-R'" bedeuten, wobei R''' H, gegebenenfalls verzweigtes C₁-C₃₄ Alkyl/Cycloalkyl, C₇-C₃₄-Alkylaryl oder C₆-C₃₄-Aryl sein kann.

Solche Diarylcarbonate sind beispielsweise: Diphenylcarbonat, Methylphenyl-phenyl-carbonate und Di-(methylphenyl)-carbonate, auch als Gemisch, wobei die Stellung der Methylgruppe an den Phenylringen beliebig sein kann sowie Dimethylphenyl-phenyl-carbonate und Di-(dimethylphenyl)-carbonate, auch als Gemisch, wobei die Stellung der Methylgruppen an den Phenylringen beliebig sein können, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat,4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Bevorzugte Diarylverbindungen sind: Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat und Di-[4-(1-methyl-1-phenylethyl)-phenyl]-carbonat.

Besonders bevorzugt ist Diphenylcarbonat.

Die Diarylcarbonate können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Zur Beeinflussung bzw. Veränderung der Endgruppen kann zusätzlich eine Monohydroxyarylverbindung eingesetzt werden, die nicht zur Herstellung des verwendeten Diarylcarbonats benutzt wurde. Sie wird durch folgende allgemeine Formel dargestellt: 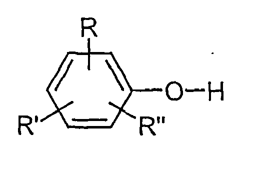 wobei R, R' und R" bei den Diarylcarbonaten definiert sind aber in diesem speziellen Fall R nicht H sein kann, wohl aber R' und R" H sein können.

Solche Monohydroxyarylverbindungen sind beispielsweise: 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind: 4-tert-Butylphenol, 4-iso-Octylphenol und 3-Pentadecylphenol.

Dabei ist eine Monohydroxyarylverbindung zu wählen, deren Siedepunkt über dem der Monohydroxyarylverbindung liegt, die zur Herstellung des verwendeten Diarylcarbonates eingesetzt wurde. Die Monohydroxyarylverbindung kann zu jedem Zeitpunkt im Reaktionsverlauf zugegeben werden. Sie wird bevorzugt zu Beginn der Reaktion zugegeben oder aber auch an beliebiger Stelle im Verfahrensverlauf. Der Anteil an freier Monohydroxyarylverbindung kann 0,2 bis 20 Mol %, bevorzugt 0,4 bis 10 Mol %, bezogen auf die Dihydroxyarylverbindung, betragen.

Die Endgruppen können auch durch Mitverwendung eines Diarylcarbonats, dessen Basis-Monohydroxyarylverbindung einen höheren Siedepunkt hat als die Basis- Monohydroxyarylverbindung des hauptsächlich eingesetzten Diarylcarbonats, verändert werden. Auch hier kann das Diarylcarbonat zu jedem Zeitpunkt im Reaktionsverlauf zugegeben werden. Es wird bevorzugt zu Beginn der Reaktion zugegeben oder aber auch an beliebiger Stelle im Verfahrensverlauf. Der Anteil des Diarylcarbonates mit der höher siedenden Basis-Monohydroxyarylverbindung an der gesamt eingesetzten Diarylcarbonatmenge kann 1 bis 40 Mol %, bevorzugt 1 bis 20 Mol % und besonders bevorzugt 1 bis 10 Mol % betragen.

Für die Herstellung von Polycarbonaten sind geeignete Dihydroxyarylverbindungen solche der Formel

HO-Z-OH

in denen Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'- Bis-(hydroxyphenyl)-diisopropylbenzole, sowie deren kernalkylierte und kernhalogenierte Verbindungen.

Weitere geeignete Dihydroxyarylverbindungen sind aus dem Stand der Technik bekannt.

Bevorzugte Dihydroxyarylverbindungen sind beispielsweise: Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-4-methyl-cyclohexan, 1,1-Bis-(4-hydroxyphenyl)-3,3,5-trimethyl-cyclohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1*H*-inden]-5,5'-diol.

Besonders bevorzugte Dihydroxyarylverbindungen sind: Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1 -Bis-(4-hydroxyphenyl)-cyclohexän, 1,1-Bis-(3,5-dimethyl-4-hydroxyphenyl)-cyclohexan, 1,1-Bis-(4-hydroxyphenyl)-3,3,5-trimethyl-cyclohexan, 1,1'- Bis-(4-hydroxyphenyl)-3-diisopropyl-benzol und 1,1'-Bis-(4-hydroxyphenyl)-4-diisopropyl-benzol.

Ganz besonders bevorzugt sind: 4,4'-Dihydroxydiphenyl, 2,2-Bis-(4-hydroxyphenyl)-propan und Bis-(4-hydroxyphenyl)-3,3,5-trimethyl-cyclohexan.

Es können sowohl eine Dihydroxyarylverbindung unter Bildung von Homopolycarbonaten als auch mehrere Dihydroxyarylverbindungen unter Bildung von Copolycarbonaten verwendet werden.

Anstelle der monomeren Dihydroxyarylverbindungen können auch niedermolekulare, überwiegend OH-endgruppengestoppte Oligocarbonate als Ausgangsverbindung eingesetzt werden.

Die Dihydroxyarylverbindungen können auch mit Restgehalten der Monohydroxyarylverbindungen, aus denen sie hergestellt wurden bzw. die niedermolekularen Oligocarbonate mit Restgehalten der Monohydroxyarylverbindungen, die bei der Herstellung der Oligomeren abgespalten wurden, eingesetzt werden. Die Gehalte können bis zu 20 %, vorzugsweise 10 %, besonders bevorzugt bis 5 % und ganz besonders bevorzugt bis zu 2 % betragen.

Die Polycarbonate können gezielt verzweigt werden. Geeignete Verzweiger sind die für die Polycarbonatherstellung bekannten Verbindungen mit drei und mehr funktionellen Gruppen, vorzugsweise solche mit drei oder mehr Hydroxylgruppen.

Einige der verwendbaren Verbindungen mit drei oder mehr phenolischen Hydroxylgruppen sind beispielsweise: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4 bis-(4-hydroxyphenyl)-cyclohexyl]-propan, 2,4-Bis-(4-hydroxyphenyl-isopropyl)-phenol und Tetra-(4-hydroxyphenyl)-methan.

Einige der sonstigen trifunktionellen Verbindungen sind: 2,4-Dihydroxybenzoesäure, Trimesinsäure, Cyanurchlorid und 3,3-Bis-(3-methyl-4-hydroxyphenyl)-2-oxo-2,3-dihydroindol.

Die Verzweiger werden in Mengen von 0,02 bis 3,6 Mol %, bezogen auf die Dihydroxyarylverbindung, eingesetzt.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Katalysatoren werden im Schmelzumesterungsverfahren zur Herstellung von Polycarbonaten die in der Literatur bekannten basischen Katalysatoren wie beispielsweise Alkali- und Erdalkalihydroxyde und -oxide, aber auch Ammonium- oder Phosphoniumsalze, im folgenden als Oniumsalze bezeichnet, eingesetzt. Bevorzugt werden bei der Synthese Oniumsalze, besonders bevorzugt Phosphoniumsalze eingesetzt. Phosphoniumsalze im Sinne der Erfindung sind solche der allgemeinen Formel: 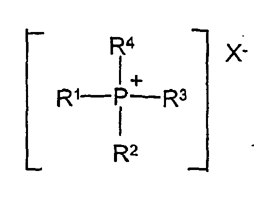 wobei R¹⁻⁴ gleiche oder verschiedene C₁-C₁₀-Alkyle, C₆-C₁₄-Aryle, C₇-C₁₅-Arylalkyle oder C₅-C₆-Cycloalkyle, bevorzugt Methyl oder C₆-C₁₄-Aryle, besonders bevorzugt Methyl oder Phenyl sein können, und X⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C₆-C₁₄-Aryl, C₇-C₁₅-Arylalkyl oder C₅-C₆-Cycloalkyl, bevorzugt Phenyl sein kann.

Bevorzugte Katalysatoren sind Tetraphenylphosphoniumchlorid, Tetraphenylphosphoniumhydroxid und Tetraphenylphosphoniumphenolat, besonders bevorzugt ist Tetraphenylphosphoniumphenolat.

Sie werden bevorzugt in Mengen von 10⁻⁸ bis 10⁻³ mol, bezogen auf ein mol Dihydroxyarylverbindung, besonders bevorzugt in Mengen von 10⁻⁷ bis 10⁻⁴ mol, eingesetzt.

Weitere Katalysatoren können allein oder zusätzlich zu dem Oniumsalz als Cokatalysator verwendet werden, um die Geschwindigkeit der Polykondensation zu erhöhen.

Dazu gehören die alkalisch wirkenden Salze von Alkalimetallen und Erdalkalimetallen, wie Hydroxyde, Alkoxyde und Aryloxyde von Lithium, Natrium und Kalium, vorzugsweise Hydroxyde, Alkoxyde oder Aryloxyde von Natrium. Am meisten bevorzugt sind Natriumhydroxyd und Natriumphenolat, sowie auch das Dinatriumsalz des 2,2-Bis-(4-hydroxyphenyl)-propans.

Die Mengen der alkalisch wirkenden Salze von Alkalimetallen und Erdalkalimetallen allein oder als Cokatalysator können im Bereich von 1 bis 500 ppb, vorzugsweise 5 bis 300 ppb und am meisten bevorzugt 5 bis 200 ppb liegen, jeweils berechnet als Natrium und bezogen auf zu bildendes Polycarbonat.

Die alkalisch wirkenden Salze von Alkalimetallen und Erdalkalimetallen können schon bei der Herstellung der Oligocarbonate, das heißt zu Beginn der Synthese, eingesetzt oder aber auch erst vor der Polykondensation zugemischt werden, um unerwünschte Nebenreaktionen zu unterdrücken. Weiter besteht auch die Möglichkeit, ergänzende Mengen Oniumkatalysatoren des gleichen Typs oder eines anderen vor der Polykondensation zuzugeben.

Die Zugabe der Katalysatoren erfolgt in Lösung, um bei der Dosierung schädliche Überkonzentrationen zu vermeiden. Die Lösungsmittel sind system- und verfahrensinhärente Verbindungen wie beispielsweise Dihydroxyarylverbindungen, Diarylcarbonate oder Monohydroxyarylverbindungen. Besonders bevorzugt sind Monohydroxyarylverbindungen, weil dem Fachmann geläufig ist, dass sich die Dihydroxyarylverbindungen und Diarylcarbonate bei schon leicht erhöhten Temperaturen, insbesondere unter Katalysatoreinwirkung, leicht verändern und zersetzen. Hierunter leiden die Polycarbonatqualitäten. Beim technisch bedeutsamen Umesterungsverfahren zur Herstellung von Polycarbonat ist die bevorzugte Verbindung Phenol. Phenol bietet sich auch deshalb schon zwingend an, weil der vorzugsweise benutzte Katalysator Tetraphenylphosphoniumphenolat bei der Herstellung als Mischkristall mit Phenol isoliert wird.

Die Erfindung wird nachfolgend anhand der beigefügten Zeichnungen näher erläutert. Es zeigen
Figur 1 ein Schema einer ersten Ausführungsform des Abscheidebehälters zur Durchführung des erfindungsgemäßen Verfahrens
Figur 2 ein Schema einer zweiten Ausführungsform des Abscheidebehälters.

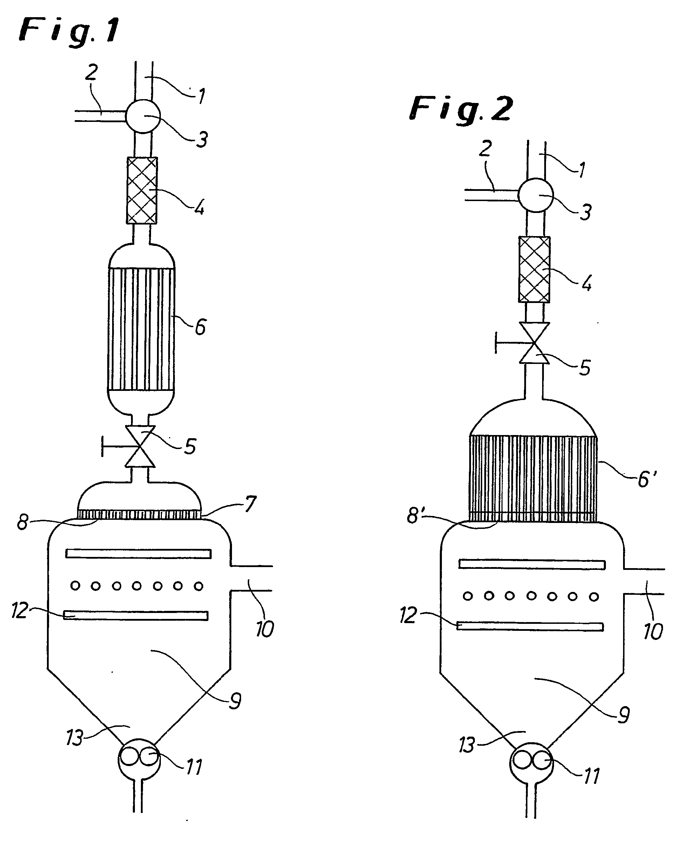

In Figur 1 ist ein Abscheidebehälter 9 dargestellt, welcher in seinem oberen Bereich eine horizontal angeordnete Platte 7 mit Eintrittsöffnungen 8 aufweist. Der Abscheidebehälter 9 besitzt einen Auslass 10 für die flüchtigen Bestandteile sowie einen nach unten gerichteten konischen Auslass 13 im unteren Bereich, welcher mit einer Austragsvorrichtung 11 versehen ist. Im Inneren des Abscheidebehälters 9 sind Leitelemente in Form von Drähten 12 vorgesehen. Die Drähte 12 sind im Wesentlichen horizontal angeordnet, wobei jeweils mehrere Drähte 12 eine Ebene bilden. Die Drähte einer Ebene sind im Wesentlichen parallel zueinander angeordnet. Mehrere Ebenen solcher parallel angeordneter Drähte 12 sind vorgesehen (3 Ebenen in Fig.1), wobei die Drähte zweier übereinander angeordneter Ebenen in einem im Wesentlichen rechten Winkel zueinander stehen.

Über eine Zuführleitung 1 wird die Polycarbonatschmelze dem Abscheidebehälter 9 zugeführt. Mit Hilfe einer Zuführleitung 2 wird über eine Dosiervorrichtung 3 Schäumungsmittel in die Polycarbonatschmelze eingemischt. Das Polycarbonat-Schäumungsmittel-Gemisch wird zunächst durch einen statischen Mischer 4, dann durch einen Wärmetauscher 6 geleitet. Über ein Druckhalteventil 5 strömt die Schmelze auf die Platte 7 mit den Eintrittsöffnungen 8. Dabei wird die Schmelze in Teilströme aufgeteilt. Die Teilströme der Schmelze treten über die Eintrittsöffnungen 8 in den Abscheidebehälter 9 ein. Am Boden 13 des Abscheidebehälters 9 wird die entgaste Polycarbonatsclunelze über die Austragsvorrichtung 11 abgezogen.

Figur 2 zeigt im Unterschied zu der in Figur 1 dargestellten Ausführungsform im oberen Bereich des Abscheidebehälters 9 einen vertikal angeordneten Wärmetauscher 6' in Form eines Rohrbündelwärmetauschers. Die nach unten gerichteten Rohre stellen die Eintrittsöffnungen 8' dar.

Gemäß Figur 2 wird über eine Zuführleitung 1 die Polycarbonatschmelze dem Abscheidebehälter 9 zugeführt. Mit Hilfe einer Zuführleitung 2 wird über eine Dosiervorrichtung 3 Schäumungsmittel in die Polycarbonatschmelze eingemischt. Das Polycarbonat-Schäumungsmittel-Gemisch wird zunächst durch einen statischen Mischer 4 geleitet. Über ein Druckhalteventil 5 strömt die Schmelze dann in die Eintrittsöffnungen 8' eines Rohrbündelwärmetauschers 6', wodurch der Schmelzestrom in mehrere Teilströme aufgeteilt wird. Die Eintrittsöffnungen 8' münden in den Abscheidebehälter 9. Am Boden 13 des Abscheidebehälters 9 wird die entgaste Polycarbonatschmelze über die Austragsvorrichtung 11 abgezogen.

### Beispiele

Die nachfolgenden Versuche wurden an Polycarbonaten aus Bisphenol A durchgeführt. Die zu entfernende flüchtige Komponente war Diphenylcarbonat.

Die Leitelemente bestanden aus zehn horizontal angeordneten Drähten von je 3 mm Durchmesser, die unterhalb der Eintrittsöffnung im Abstand von jeweils 10 cm untereinander gespannt waren. Jeweils zwei untereinander angeordnete Drähte waren gegeneinander um 90° in der Horizontalen gedreht.

Tabelle 1 fasst die Verfahrensbedingungen sowie die Versuchsergebnisse zusammen. In Tabelle 1 ist mit Massenstrom pro Öffnung der Massenstrom eines Teilstroms gemeint. Die Begriffe Schleppmittel und Schäumungsmittel werden hier synonym verwendet. Der Abscheidebehälter ist als Abscheider bezeichnet und mit "Abscheid." abgekürzt. Die Leitelemente sind als Einbauten und die Eintrittsöffnungen als Düsen bezeichnet. Bei der Temperatur handelt es sich um die Temperatur beim Eintritt in die Eintrittsöffnung. In Spalte 8 ist der Zustand des Schäumungsmittels beim Eintritt in die Eintrittsöffnung beschrieben.

Tabelle 1 zeigt, dass die Beispiele Nr. 3, 4, 7, 10, 13 und 17 kein Schäumungsmittel verwenden. Daher gelingt die Entfernung der flüchtigen Komponente Diphenylcarbonat nur sehr unzureichend.

In den Beispielen 1 und 2 ist das Schäumungsmittel am Eintritt in die Eintrittsöffnung nicht vollständig gelöst. Dies führt zu einer Verschlechterung der Entgasung gegenüber den Beispielen 8, 9, 11 und 12, in denen das Schäumungsmittel am Eintritt in die Eintrittsöffnung gelöst ist.

Die Beispiele 14, 15, 16 sowie 18, 19 und 20 zeigen den besonderen Vorteil der Leitelemente.

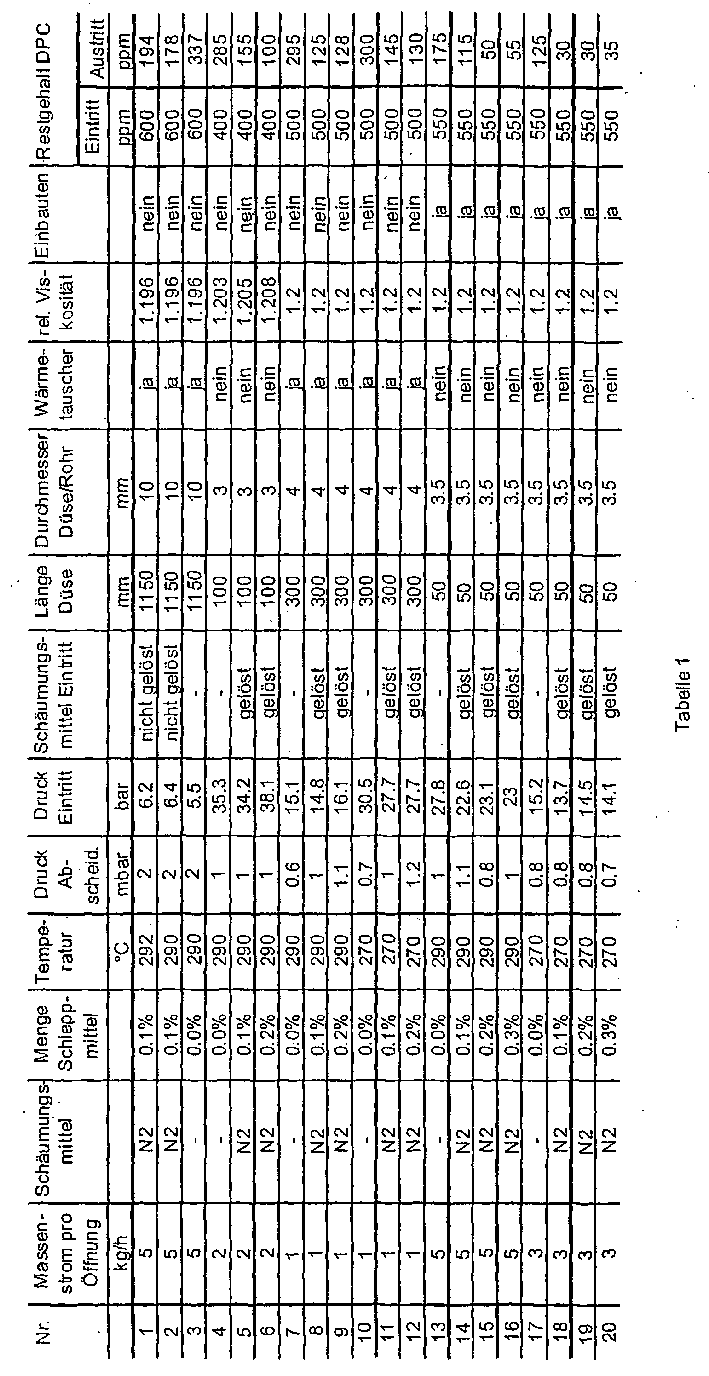

## Patentansprüche

1. Verfahren zur Herstellung von Polycarbonat nach dem Umesterungsverfahren wenigstens mit den folgenden Schritten:
(a) Umsetzen wenigstens einer aromatischen Dihydroxyarylverbindung und eines Diarylcarbonats in der Schmelze wenigstens in Gegenwart eines Katalysators
(b) Vermischen der in Schritt (a) erhaltenen Schmelze mit einem Schäumungsmittel
(c) Entgasen der Schmelze aus (b) durch Einleiten der Schmelze über Eintrittsöffnungen in einen Abscheidebehälter
**dadurch gekennzeichnet, dass**
das Entgasen gemäß Schritt (c) unter Aufschäumen erfolgt, wobei die Schmelze über die Eintrittsöffnungen in Teilströme von 0,1 bis 20 kg/h aufgeteilt wird, die Temperatur beim Eintritt in die Eintrittsöffnungen 250 bis 340 °C und der Druck in dem Abscheidebehälter 0,1 bis 20 mbar beträgt und
dass der Katalysator in Schritt (a) zu mindestens 80 Gew.% deaktiviert wird oder der Schmelze ein Inhibitor zugesetzt wird.

2. Verfahren nach Anspruch 1, **dadurch gekennzeichnet, dass** das Schäumungsmittel beim Eintritt in die Eintrittsöffnungen gemäß Schritt (c) vollständig gelöst ist.

3. Verfahren nach einem der Ansprüche 1 oder 2, **dadurch gekennzeichnet, dass** das Schäumungsmittel Wasser, Kohlendioxid oder Stickstoff ist.

4. Verfahren nach einem der Ansprüche 1 bis 3, **dadurch gekennzeichnet, dass** die Konzentration an phenolischen OH-Gruppen in dem in Schritt (a) erhaltenen Polycarbonat 100 bis 450 ppm beträgt.

5. Verfahren nach einem der Ansprüche 1 bis 4, **dadurch gekennzeichnet, dass** die Verweilzeit in dem Abscheidebehälter gemäß Schritt (c) maximal 10 Minuten beträgt.

6. Verfahren nach einem der Ansprüche 1 bis 5, **dadurch gekennzeichnet, dass** die Schmelze vor Eintritt in die Eintrittsöffnungen gemäß Schritt (c) auf eine Temperatur von 250 bis 340 °C erwärmt wird.

7. Verfahren nach einem der Ansprüche 1 bis 6, **dadurch gekennzeichnet, dass** in dem Abscheidebehälter im Wesentlichen horizontal angeordnete Leitelemente vorgesehen sind.

## Claims

1. Process for the preparation of polycarbonate by the transesterification process, at least comprising the following steps:
(a) reacting at least one aromatic dihydroxyaryl compound and a diaryl carbonate in the melt at least in the presence of a catalyst
(b) mixing the melt obtained in step (a) with a foaming agent
(c) degassing the melt from (b) by passing the melt through inlet openings into a separating vessel,
**characterised in that**
the degassing according to step (c) is carried out with foaming, the melt being divided by the inlet openings into partial streams of from 0.1 to 20 kg/h, the temperature on entry into the inlet openings being from 250 to 340°C and the pressure in the separating vessel being from 0.1 to 20 mbar, and
**in that** the catalyst in step (a) is deactivated to the extent of at least 80 %, or an inhibitor is added to the melt.

2. Process according to claim 1, **characterised in that** the foaming agent is completely dissolved on entry into the inlet openings according to step (c).

3. Process according to either claim 1 or claim 2, **characterised in that** the foaming agent is water, carbon dioxide or nitrogen.

4. Process according to any one of claims 1 to 3, **characterised in that** the concentration of phenolic OH groups in the polycarbonate obtained in step (a) is from 100 to 450 ppm.

5. Process according to any one of claims 1 to 4, **characterised in that** the residence time in the separating vessel according to step (c) is not more than 10 minutes.

6. Process according to any one of claims 1 to 5, **characterised in that** the melt is heated to a temperature of from 250 to 340°C before entering the inlet openings according to step (c).

7. Process according to any one of claims 1 to 6, **characterised in that** guide elements that are arranged substantially horizontally are provided in the separating vessel.

## Revendications

1. Procédé de préparation de polycarbonate selon le procédé de transestérification, au moins avec les étapes suivantes :
(a) réaction d'au moins un composé aromatique dihydroxylarylique et d'un carbonate de diaryle dans la masse fondue au moins en présence d'un catalyseur ;
(b) mélange de la masse fondue obtenue à l'étape (a) avec un agent moussant ;
(c) dégazage de la masse fondue de (b) par passage de la masse fondue par des ouvertures d'introduction dans un séparateur,
**caractérisé en ce que** le dégazage selon l'étape (c) est réalisé avec moussage, où la masse fondue est répartie dans les ouvertures d'introduction en courants partiels de 0,1 à 20 kg/heure, la température à l'entrée dans les ouvertures d'introduction se situe dans l'intervalle allant de 250 à 340°C et la pression dans le séparateur se situe dans l'intervalle allant de 0,1 à 20 mbar, et
**en ce que** le catalyseur de l'étape (a) est désactivé à au moins 80% en poids ou on ajoute un inhibiteur à la masse fondue.

2. Procédé selon la revendication 1, **caractérisé en ce que** l'agent de moussage est complètement dissous lors de l'entrée dans les ouvertures d'introduction selon l'étape (c).

3. Procédé selon l'une des revendications 1 ou 2, **caractérisé en ce que** l'agent de moussage est l'eau, le dioxyde de carbone ou l'azote.

4. Procédé selon l'une des revendications 1 à 3, **caractérisé en ce que** la concentration en groupes OH phénoliques se situe dans le polycarbonate obtenu à l'étape (a), dans l'intervalle allant de 100 à 450 ppm.

5. Procédé selon l'une des revendications 1 à 4, **caractérisé en ce que** le temps de séjour dans le séparateur selon l'étape (c) se situe à maximum 10 minutes.

6. Procédé selon l'une des revendications 1 à 5, **caractérisé en ce que** la masse fondue est chauffée avant l'entrée dans les ouvertures d'introduction selon l'étape (c), à une température allant de 250 à 340°C.

7. Procédé selon l'une des revendications 1 à 6, **caractérisé en ce que** dans le séparateur, des éléments de guidage essentiellement horizontaux sont prévus.
